# EUROPEAN PATENT APPLICATION

(11) **EP 4 043 855 A1**
(43) Date of publication of application: **17.08.2022**
(21) Application number: 20872853.5
(22) Date of filing: 28.09.2020
(51) Int. Cl.: G01M 13/04

(54) **METHOD FOR EVALUATING AND TESTING HYDROGEN EMBRITTLEMENT SEPARATION OF ROLLING BEARING**

(30) Priority: 03.10.2019 JP 2019183094
(71) Applicant: NTN Corporation, Osaka-shi, Osaka 550-0003 (JP)
(72) Inventor: SASAKI, Katsuaki, Iwata-shi, Shizuoka 438-8510 (JP); YAMAGUCHI, Tooru, Iwata-shi, Shizuoka 438-8510 (JP)
(74) Representative: Bockhorni & Brüntjen Partnerschaft Patentanwälte mbB
(86) International application number: PCT/JP2020/036663
(87) International publication number: WO 2021/065811

(57) **Abstract**

An evaluation test method for flaking caused by hydrogen embrittlement includes: preparing a rolling bearing (10) having a first bearing ring (11), a second bearing ring (12), and a rolling element (13), the first bearing ring (11) being a rotation ring including a first raceway surface (1 Ida), the second bearing ring (12) being a stationary ring including a second raceway surface (12ca) facing the first raceway surface, the rolling element (13) being disposed between the first raceway surface and the second raceway surface; and applying a rotation around a central axis (A1) onto the first bearing ring in a state in which a load is applied between the first raceway surface and the second raceway surface through the rolling element. Each of the first bearing ring, the second bearing ring, and the rolling element is composed of a steel. The first raceway surface and the second raceway surface are always entirely immersed in lubricating oil during the rotation. The lubricating oil contains substantially no water.

## Description

### TECHNICAL FIELD

The present invention relates to an evaluation test method for flaking caused by hydrogen embrittlement in a rolling bearing.

### BACKGROUND ART

NPL 1 (HIROSHI HAMADA et al., "The Influence of Hydrogen on Tension-Compression and Rolling Contact Fatigue Properties of Bearing Steel", NTN Technical Review No. 74, page 50, 2006) describes an evaluation test method for flaking caused by hydrogen embrittlement in a bearing steel. In the test method described in NPL 1, a rolling slip test is performed using two cylindrical test pieces each composed of the bearing steel. Each of the cylindrical test pieces is charged with hydrogen prior to the rolling slip test. Therefore, according to the test method described in NPL 1, an evaluation for flaking caused by hydrogen embrittlement in the bearing steel can be made.

NPL 2 (MIKA KOHARA et al., "Study on Mechanism of Hydrogen Generation from Lubricants", Tribology Transactions No. 49, page 53, 2006) describes a ball-on-disk type sliding test method. In the test method described in NPL 1, a steel ball is pressed against a rotating disk with an oil film being interposed therebetween in vacuum, thereby forming a fresh surface on a surface of the steel ball. As a result, hydrogen is generated due to a tribochemical reaction and the hydrogen is detected to evaluate hydrogen embrittlement of the steel ball.

However, since the test methods described in NPL 1 and NPL 2 require such special conditions that the test piece is charged with hydrogen in advance and the test is performed in the vacuum environment, flaking caused by hydrogen embrittlement in an actual use environment of a rolling bearing cannot be reproduced.

PTL 1 (Japanese Patent Laying-Open No. 2012-181167) describes a rolling slip fatigue life test method for a rolling bearing. First, in the test method described in PTL 1, a simulation specimen, which simulates a thrust ball bearing, is prepared. The simulation specimen has an inner ring, an outer ring, and a ball serving as a rolling element disposed between an inner ring raceway surface and an outer ring raceway surface. Second, in the test method described in PTL 1, the inner ring is rotated about a central axis in a state in which a load is applied between the inner ring raceway surface and the outer ring raceway surface. On this occasion, the inner ring raceway surface and the outer ring raceway surface are immersed in lubricating oil. With the above steps, an evaluation for flaking caused by hydrogen embrittlement in the rolling bearing is made in the test method described in PTL 1.

### CITATION LIST

### PATENT LITERATURE

PTL 1: Japanese Patent Laying-Open No. 2012-181167

### NON PATENT LITERATURE

NPL 1: HIROSHI HAMADA et al., "The Influence of Hydrogen on Tension-Compression and Rolling Contact Fatigue Properties of Bearing Steel", NTN Technical Review No. 74, page 50, 2006
NPL 2: MIKA KOHARA et al., "Study on Mechanism of Hydrogen Generation from Lubricants", Tribology Transactions No. 49, page 53, 2006

### SUMMARY OF INVENTION

### TECHNICAL PROBLEM

The test method described in PTL 1 does not require such conditions that the test piece is charged with hydrogen in advance or the test is performed in a vacuum environment. However, in the test method described in PTL 1, water is injected into the lubricating oil and the water in the lubricating oil needs to be suppressed from being evaporated, so that it is difficult to increase the temperature of the lubricating oil. As a result, in the test method described in PTL 1, it is difficult to attain a thin oil film between the raceway surface and the rolling element by increasing the temperature of the lubricating oil, with the result that metal contact is less likely to occur between the raceway surface and the rolling element.

The present invention has been made in view of the above problems of the conventional art. More specifically, the present invention provides an evaluation test method for flaking caused by hydrogen embrittlement in order to facilitate reproduction of the flaking caused by hydrogen embrittlement by facilitating occurrence of metal contact between a raceway surface and a rolling element.

### SOLUTION TO PROBLEM

An evaluation test method for flaking caused by hydrogen embrittlement according to one implementation of the present invention includes: preparing a rolling bearing having a first bearing ring, a second bearing ring, and a rolling element, the first bearing ring being a rotation ring including a first raceway surface, the second bearing ring being a stationary ring including a second raceway surface facing the first raceway surface, the rolling element being disposed between the first raceway surface and the second raceway surface; and applying a rotation about a central axis onto the first bearing ring in a state in which a load is applied between the first raceway surface and the second raceway surface through the rolling element. Each of the first bearing ring, the second bearing ring, and the rolling element is composed of a steel. The first raceway surface and the second raceway surface are always entirely immersed in lubricating oil during the rotation. The lubricating oil contains substantially no water.

In the test method for flaking caused by hydrogen embrittlement, the rolling bearing may be a radial ball bearing. The central axis may be along a horizontal direction. The load may be applied along a direction orthogonal to the central axis. In the test method for flaking caused by hydrogen embrittlement, the load may be applied from a lower side in a vertical direction toward an upper side in the vertical direction.

In the test method for flaking caused by hydrogen embrittlement, the rolling bearing may be a thrust ball bearing. The central axis may be along a vertical direction. The load may be applied along the vertical direction.

In the test method for flaking caused by hydrogen embrittlement, a content of the water in the lubricating oil may be less than or equal to 200 mass ppm. In the test method for flaking caused by hydrogen embrittlement, the lubricating oil may be a CVT fluid. In the test method for flaking caused by hydrogen embrittlement, a hydrogen concentration in the steel may be less than or equal to 0.02 mass ppm.

### ADVANTAGEOUS EFFECTS OF INVENTION

According to the test method for flaking caused by hydrogen embrittlement according to one implementation of the present invention, reproduction of flaking caused by hydrogen embrittlement can be facilitated by facilitating occurrence of metal contact between the raceway surface and the rolling element.

### BRIEF DESCRIPTION OF DRAWINGS

Fig. 1 is a flowchart of a test method for flaking caused by hydrogen embrittlement according to a first embodiment.
Fig. 2 is a cross sectional view along a central axis A1 of a rolling bearing 10.
Fig. 3 is a schematic cross sectional view of a test apparatus 20.
Fig. 4 is a cross sectional view along a central axis A3 of a rolling bearing 30.
Fig. 5 is a schematic cross sectional view of a test apparatus 40.

### DESCRIPTION OF EMBODIMENTS

Details of embodiments will be described with reference to figures. In the below-described figures, the same or corresponding portions are denoted by the same reference characters, and will not be described repeatedly.

### (First Embodiment)

The following describes a test method for flaking caused by hydrogen embrittlement according to a first embodiment.

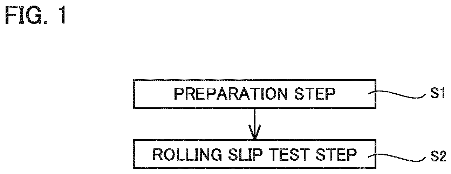

Fig. 1 is a flowchart of the test method for flaking caused by hydrogen embrittlement according to the first embodiment. As shown in Fig. 1, the test method for flaking caused by hydrogen embrittlement according to the first embodiment includes a preparation step S1 and a rolling slip test step S2.

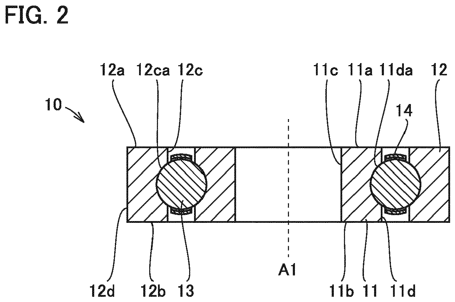

In preparation step S1, a rolling bearing 10 to be subjected to the test method for flaking caused by hydrogen embrittlement according to the first embodiment is prepared. Fig. 2 is a cross sectional view along a central axis A1 of rolling bearing 10. As shown in Fig. 2, rolling bearing 10 is a radial ball bearing. More specifically, rolling bearing 10 is a deep groove ball bearing. Rolling bearing 10 includes an inner ring 11, an outer ring 12, a rolling element 13, and a cage 14.

Inner ring 11 has an annular (ring) shape. Inner ring 11 is a rotation ring of rolling bearing 10. Inner ring 11 has central axis A1. Inner ring 11 has an upper surface 11a, a bottom surface 11b, an inner peripheral surface 11c, and an outer peripheral surface 11d.

Upper surface 11a and bottom surface 11b constitute end surfaces of inner ring 11 in a direction along central axis A1. Bottom surface 11b is a surface opposite to upper surface 11a in the direction along central axis A1. Inner peripheral surface 11c extends along a peripheral direction of inner ring 11. Outer peripheral surface 11d extends along the peripheral direction of inner ring 11. Outer peripheral surface 11d is a surface opposite to inner peripheral surface 11c in a radial direction of inner ring 11.

Outer peripheral surface 11d has a raceway surface 11da. Raceway surface 11da is a portion of outer peripheral surface 11d to be in contact with rolling element 13. In raceway surface 11da, outer peripheral surface 11d is recessed to the inner peripheral surface 11c side. When viewed in the cross section along central axis A1, raceway surface 11da has a partial arc shape.

Outer ring 12 has an annular (ring) shape. Outer ring 12 is a stationary ring of rolling bearing 10. Outer ring 12 has an upper surface 12a, a bottom surface 12b, an inner peripheral surface 12c, and an outer peripheral surface 12d.

Upper surface 12a and bottom surface 12b constitute end surfaces of outer ring 12 in the direction along central axis A1. Bottom surface 12b is a surface opposite to upper surface 12a in the direction along central axis A1. Inner peripheral surface 12c extends along a peripheral direction of outer ring 12. Outer peripheral surface 12d extends along the peripheral direction of outer ring 12. Outer peripheral surface 12d is a surface opposite to inner peripheral surface 12c in a radial direction of outer ring 12.

Inner peripheral surface 12c has a raceway surface 12ca. Raceway surface 12ca is a portion of inner peripheral surface 12c to be in contact with rolling element 13. In raceway surface 12ca, inner peripheral surface 12c is recessed to the outer peripheral surface 12d side. When viewed in the cross section along central axis A1, raceway surface 12ca has a partial arc shape.

Inner ring 11 and outer ring 12 are disposed such that outer peripheral surface 11d and inner peripheral surface 12c (raceway surface 11da and raceway surface 12ca) face each other.

Rolling element 13 has a spherical shape. Rolling element 13 is disposed between raceway surface 11da and raceway surface 12ca. A plurality of rolling elements 13 are provided, for example. Cage 14 is disposed between outer peripheral surface 11d and inner peripheral surface 12c. Cage 14 holds rolling elements 13 so as to maintain an interval between rolling elements 13 in the peripheral direction of rolling bearing 10 to fall within a predetermined range.

Each of inner ring 11, outer ring 12 and rolling elements 13 is composed of a steel. Each of inner ring 11, outer ring 12 and rolling elements 13 is composed of, for example, a bearing steel. A type of the steel used for each of inner ring 11, outer ring 12 and rolling elements 13 is , for example, SUJ2, SUJ3, or the like, each of which is a high-carbon chromium bearing steel specified in JIS (JIS G 4805: 2008). It should be noted that the steel of inner ring 11, the steel of outer ring 12, and the steel of rolling element 13 do not need to be the same type of steel. It should be noted that a hydrogen concentration in each of the steels is, for example, less than or equal to 0.02 mass ppm. That is, the steel is not charged with hydrogen. It should be noted that there is no lower limit for the hydrogen concentration in the steel.

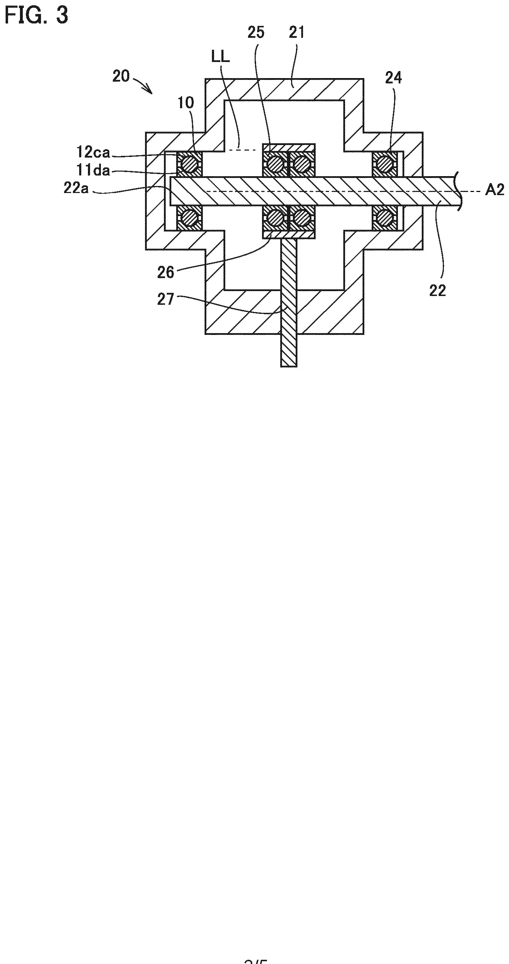

Rolling slip test step S2 is performed using a test apparatus 20. Fig. 3 is a schematic cross sectional view of test apparatus 20. As shown in Fig. 3, test apparatus 20 includes a housing 21, a rotation shaft 22, a driving unit 23 (not shown), a supporting bearing 24, a supporting bearing 25, a load receiving member 26, and a pressing rod 27. It should be noted that the upward/downward direction in Fig. 3 corresponds to the vertical direction, and the leftward/rightward direction in Fig. 3 corresponds to the horizontal direction.

Housing 21 is configured to store lubricating oil therein. Rotation shaft 22 has a central axis A2. Rotation shaft 22 has a first end 22a and a second end 22b (not shown) in a direction along central axis A2. Second end 22b is an end opposite to first end 22a in the direction along central axis A2. Rotation shaft 22 is disposed such that central axis A2 is along the horizontal direction.

The first end 22a side of rotation shaft 22 is disposed inside housing 21. Since rolling bearing 10 is disposed inside housing 21, rolling bearing 10 supports the first end 22a side of rotation shaft 22 rotatably about central axis A2. More specifically, inner ring 11 is attached to rotation shaft 22, and outer ring 12 is attached to housing 21. It should be noted that central axis A1 of inner ring 11 coincides with central axis A2 of rotation shaft 22.

Rotation shaft 22 is connected to driving unit 23 on the second end 22b side. Driving unit 23 is, for example, a motor. Driving unit 23 is configured to rotate rotation shaft 22 about central axis A2.

Supporting bearing 24 is, for example, a deep groove ball bearing. It should be noted that supporting bearing 24 is not the bearing to be subjected to the test method for flaking caused by hydrogen embrittlement according to the first embodiment. Supporting bearing 24 is disposed inside housing 21. An inner ring of supporting bearing 24 is attached to rotation shaft 22, and an outer ring of supporting bearing 24 is attached to housing 21. Supporting bearing 24 supports rotation shaft 22 rotatably about central axis A2 at a position away from first end 22a.

Supporting bearing 25 is, for example, a deep groove ball bearing. It should be noted that supporting bearing 25 is not the bearing to be subjected to the test method for flaking caused by hydrogen embrittlement according to the first embodiment. Supporting bearing 25 is disposed inside housing 21. An inner ring of supporting bearing 25 is attached to rotation shaft 22, and an outer ring of supporting bearing 25 is attached to load receiving member 26. Supporting bearing 25 supports rotation shaft 22 between rolling bearing 10 and supporting bearing 24 rotatably about central axis A2.

One end side of pressing rod 27 is disposed inside housing 21. Pressing rod 27 is inserted into housing 21 from the bottom wall side of housing 21. Pressing rod 27 is attached to load receiving member 26 at one end. Pressing rod 27 extends along the vertical direction. Pressing rod 27 is moved from a lower side in the vertical direction toward an upper side in the vertical direction by a load cell or the like, for example. Thus, a load is applied between raceway surface 11da and raceway surface 12ca through rolling element 13 along a direction orthogonal to central axis A2 (central axis A1) (more specifically, along a direction from the lower side in the vertical direction toward the upper side in the vertical direction).

Rolling slip test step S2 is performed by rotating rotation shaft 22 about central axis A2 (by rotating inner ring 11 about central axis A1) in a state in which the load is applied. In Fig. 3, liquid level LL of the lubricating oil supplied into housing 21 is indicated by a dotted line. It should be noted that the liquid level of the lubricating oil supplied to housing 21 is along central axis A2.

During the rotation of rotation shaft 22, raceway surface 11da and raceway surface 12ca are entirely immersed in the lubricating oil. From another viewpoint, it can be said that during the rotation of rotation shaft 22, liquid level LL of the lubricating oil is always located above raceway surface 12ca in the vertical direction.

The lubricating oil contains substantially no water (H₂O). More specifically, the content of the water in the lubricating oil is, for example, less than or equal to 200 mass ppm. The content of the water in the lubricating oil may be less than or equal to 100 mass ppm. It should be noted that there is no lower limit for the content of the water in the lubricating oil. During the rotation of rotation shaft 22, the temperature of the lubricating oil is preferably more than or equal to 100°C and less than a flash point of the lubricating oil. When the temperature of the lubricating oil is more than or equal to 100°C and less than the flash point of the lubricating oil, the water in the lubricating oil is evaporated during the rotation of rotation shaft 22, with the result that no water is contained in the lubricating oil. As the lubricating oil, a CVT fluid is used, for example. However, the lubricating oil used in the test method for flaking caused by hydrogen embrittlement according to the first embodiment is not limited to this.

The following describes effects of the test method for flaking caused by hydrogen embrittlement according to the first embodiment.

Flaking is considered to be caused by hydrogen embrittlement in the raceway surface by the following mechanism. First, an oxide film formed in the raceway surface is detached by metal contact between the raceway surface and the rolling element, thereby forming a fresh surface. Second, since the fresh surface is chemically unstable, hydrogen generated by a tribochemical reaction is incorporated into the fresh surface to chemically stabilize the fresh surface. Third, when the hydrogen is incorporated into the steel, a cohesive strength between lattices of the steel is decreased, thus causing flaking in the raceway surface at an early stage.

Even though the oxide film formed in the raceway surface is detached due to the metal contact with the rolling element to form the fresh surface, when oxygen is present in the surroundings, the oxygen is incorporated into the fresh surface to form an oxide film again, with the result that hydrogen is not incorporated into the fresh surface and flaking is therefore less likely to be caused by hydrogen embrittlement.

In the test method for flaking caused by hydrogen embrittlement according to the first embodiment, raceway surface 11da and raceway surface 12ca are entirely immersed in the lubricating oil (liquid level LL is located above raceway surface 12ca in the vertical direction) during the rotation of rotation shaft 22 (rotation of inner ring 11), so that oxygen around the formed fresh surface is thin, an oxide film is less likely to be formed again in the fresh surface, and hydrogen generated by a tribochemical reaction is likely to be incorporated into the fresh surface. Therefore, according to the test method for flaking caused by hydrogen embrittlement according to the first embodiment, flaking caused by hydrogen embrittlement can be reproduced.

When the lubricating oil contains water, in order to suppress evaporation of the water, it is difficult to increase the temperature of the lubricating oil. That is, when the lubricating oil contains water, it is difficult to increase the temperature of the lubricating oil to increase an oil film parameter (to attain a thin oil film formed between the raceway surface and the rolling element). As a result, in this case, the oxide film formed in the raceway surface is less likely to be detached by the metal contact between the raceway surface and the rolling element, with the result that a fresh surface is less likely to be formed in the raceway surface.

On the other hand, in the test method for flaking caused by hydrogen embrittlement according to the first embodiment, the lubricating oil contains substantially no water, so that no problem is caused when increasing the temperature of the lubricating oil to increase the oil film parameter (to attain a thin oil film formed between the raceway surface and the rolling element). Therefore, according to the test method for flaking caused by hydrogen embrittlement according to the first embodiment, the metal contact between raceway surface 11da (raceway surface 12ca) and rolling element 13 is facilitated to occur, with the result that flaking caused by hydrogen embrittlement is facilitated to be reproduced.

It should be noted that in the test method for flaking caused by hydrogen embrittlement according to the first embodiment, when the load between raceway surface 11da and raceway surface 12ca is applied from the lower side in the vertical direction toward the upper side in the vertical direction, test apparatus 20 is readily constructed to be compact in terms of the structure of test apparatus 20.

### <Exemplary Experiments>

The following test was performed to confirm that flaking caused by hydrogen embrittlement could be reproduced by the test method for flaking caused by hydrogen embrittlement according to the first embodiment. In this test, a first exemplary experiment and a second exemplary experiment were performed. In the first exemplary experiment, liquid level LL of the lubricating oil is at such a degree that the lubricating oil reached rotation shaft 22 (the core of the shaft is bathed in the oil). In the second exemplary experiment, liquid level LL of the lubricating oil was located above raceway surface 12ca in the vertical direction (that is, raceway surface 11da and raceway surface 12ca are entirely immersed in the lubricating oil).

The other conditions were the same in the first exemplary experiment and the second exemplary experiment. More specifically, in each of the first exemplary experiment and the second exemplary experiment, the load applied to rotation shaft 22 was set such that a surface pressure on raceway surface 12ca was 2844 MPa (an amount of deformation of outer ring 12 was 100 µm), and the thickness of the oil film was set to 0.09 µm.

In the first exemplary experiment, flaking was not caused in raceway surface 12ca by hydrogen embrittlement, and the rotation of rotation shaft 22 (inner ring 11) was continued until the lubricating oil is burned. On the other hand, in the second exemplary experiment, flaking was caused in raceway surface 12ca by hydrogen embrittlement, and the rotation of rotation shaft 22 (inner ring 11) was stopped when the number of rotations thereof was about 27% of that in the first exemplary experiment. Thus, according to the test method for flaking caused by hydrogen embrittlement according to the first embodiment, it was empirically revealed that flaking caused by hydrogen embrittlement can be reproduced when liquid level LL of the lubricating oil is located above raceway surface 12ca in the vertical direction and the lubricating oil contains substantially no water.

### (Modification of Test for Flaking Caused by Hydrogen Embrittlement according to First Embodiment)

In the above example, liquid level LL of the lubricating oil is always located above raceway surface 12ca in the vertical direction during the rotation of rotation shaft 22 (inner ring 11) (that is, raceway surface 11da and raceway surface 12ca are entirely immersed in the lubricating oil); however, even in the case where liquid level LL of the lubricating oil is not always located above raceway surface 12ca in the vertical direction during the rotation of rotation shaft 22 (inner ring 11), flaking caused by hydrogen embrittlement can be reproduced when a period of time during which raceway surface 11da and raceway surface 12ca are not immersed in the lubricating oil is sufficiently short.

### (Second Embodiment)

The following describes a test method for flaking caused by hydrogen embrittlement according to a second embodiment. Here, a difference from the test method for flaking caused by hydrogen embrittlement according to the first embodiment will be mainly described, and the same explanation will not be described repeatedly.

The test method for flaking caused by hydrogen embrittlement according to the second embodiment includes a preparation step S1 and a rolling slip test step S2. In this point, the test method for flaking caused by hydrogen embrittlement according to the second embodiment is the same as the test method for flaking caused by hydrogen embrittlement according to the first embodiment. However, the test method for flaking caused by hydrogen embrittlement according to the second embodiment is different from the test method for flaking caused by hydrogen embrittlement according to the first embodiment in terms of the configuration of the rolling bearing prepared in preparation step S1 and the configuration of the test apparatus used in rolling slip test step S2.

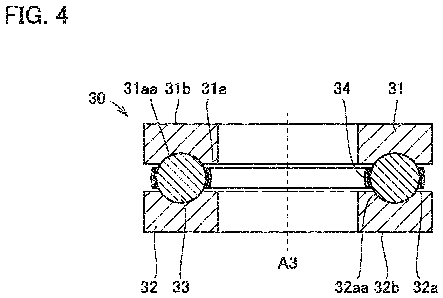

In preparation step S1 of the test method for flaking caused by hydrogen embrittlement according to the second embodiment, a rolling bearing 30 is prepared. Fig. 4 is a cross sectional view along a central axis A3 of rolling bearing 30. As shown in Fig. 4, rolling bearing 30 is a thrust ball bearing. More specifically, rolling bearing 30 is a single-direction thrust ball bearing. Rolling bearing 30 includes an inner ring 31 (shaft washer), an outer ring 32 (housing washer), a rolling element 33, and a cage 34.

Inner ring 31 has an annular (ring) shape. Inner ring 31 has a central axis A3. Inner ring 31 has a first surface 31a and a second surface 31b. First surface 31a and second surface 31b constitute end surfaces in a direction along central axis A3. Second surface 31b is a surface opposite to first surface 31a. First surface 31a has a raceway surface 31aa. Raceway surface 31 aa is a portion of first surface 31a to be in contact with rolling element 33. First surface 31a is recessed to the second surface 31b side in raceway surface 31aa. When viewed in the cross section along central axis A3, raceway surface 31aa has a partial arc shape.

Outer ring 32 has an annular (ring) shape. Outer ring 32 has central axis A3. Outer ring 32 has a first surface 32a and a second surface 32b. First surface 32a and second surface 32b constitute end surfaces in the direction along central axis A3. Second surface 32b is a surface opposite to first surface 32a. First surface 32a has a raceway surface 32aa. Raceway surface 32aa is a portion of first surface 32a to be in contact with rolling element 33. First surface 32a is recessed to the second surface 32b side in raceway surface 32aa. When viewed in the cross section along central axis A3, raceway surface 32aa has a partial arc shape.

Inner ring 31 and outer ring 32 are disposed such that first surface 31a and first surface 32a (raceway surface 31aa and raceway surface 32aa) face each other.

Rolling element 33 has a spherical shape. Rolling element 33 is disposed between raceway surface 31aa and raceway surface 32aa. A plurality of rolling elements 33 are provided, for example. Cage 34 is disposed between first surface 31a and first surface 32a. Cage 34 holds rolling elements 33 so as to maintain an interval between rolling elements 33 in the peripheral direction of rolling bearing 30 to fall within a predetermined range.

Each of inner ring 31, outer ring 32, and rolling elements 33 is composed of a bearing steel such as SUJ2, for example. A hydrogen concentration in the steel is less than or equal to 0.02 mass ppm. That is, the steel is not charged with hydrogen.

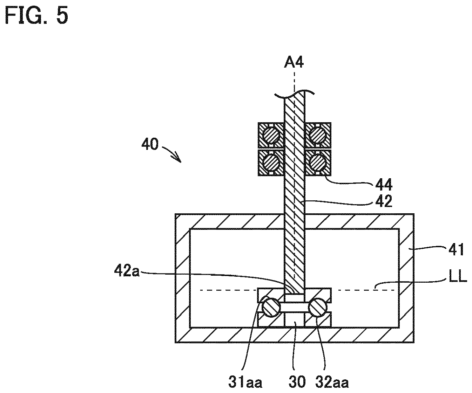

In rolling slip test step S2 of the test method for flaking caused by hydrogen embrittlement according to the second embodiment, a test apparatus 40 is used. Fig. 5 is a schematic cross sectional view of test apparatus 40. As shown in Fig. 5, test apparatus 40 includes a housing 41, a rotation shaft 42, a driving unit 43 (not shown), and a supporting bearing 44. It should be noted that the upward/downward direction in Fig. 5 corresponds to the vertical direction, and the leftward/rightward direction in Fig. 5 corresponds to the horizontal direction.

Housing 41 is configured to store the lubricating oil therein. Rotation shaft 42 has a central axis A4. Rotation shaft 42 has a first end 42a and a second end 42b (not shown) in a direction along central axis A4. Second end 42b is an end opposite to first end 42a in the direction along central axis A2. Rotation shaft 42 is disposed such that central axis A4 is along the vertical direction.

The first end 42a side of rotation shaft 42 is disposed inside housing 41. Since rolling bearing 30 is disposed inside housing 41, rolling bearing 30 supports the first end 42a side of rotation shaft 42 rotatably about central axis A4. More specifically, inner ring 31 is attached to rotation shaft 42, outer ring 32 is attached to housing 41, and inner ring 31 is disposed above outer ring 32 in the vertical direction. It should be noted that central axis A3 of inner ring 31 coincides with central axis A4 of rotation shaft 42.

Rotation shaft 42 is connected to driving unit 43 on the second end 42b side. Driving unit 43 is constituted of, for example, a motor and a load cell. Driving unit 43 is configured to rotate rotation shaft 42 about central axis A4, and to apply a load between raceway surface 31aa and raceway surface 32aa through rolling element 33. The direction of the load is along central axis A4 (central axis A3) (more specifically, along the direction from the upper side in the vertical direction toward the lower side in the vertical direction).

Supporting bearing 44 is, for example, a deep groove ball bearing. It should be noted that supporting bearing 44 is not the bearing to be subjected to the test method for flaking caused by hydrogen embrittlement according to the second embodiment. Supporting bearing 44 is disposed outside housing 41. Supporting bearing 44 supports rotation shaft 42 rotatably about central axis A4 at a position away from first end 42a.

Rolling slip test step S2 is performed by rotating rotation shaft 42 about central axis A4 (by rotating inner ring 31 about central axis A3) in a state in which the load is applied. In Fig. 5, liquid level LL of the lubricating oil supplied into housing 41 is indicated by a dotted line. It should be noted that the liquid level of the lubricating oil supplied to housing 41 is orthogonal to central axis A4.

During the rotation of rotation shaft 42, raceway surface 31aa and raceway surface 32aa are entirely immersed in the lubricating oil. From another viewpoint, it can be said that during the rotation of rotation shaft 42, liquid level LL of the lubricating oil is always located above raceway surface 31aa in the vertical direction. Therefore, also in the test method for flaking caused by hydrogen embrittlement according to the second embodiment, as with the test method for flaking caused by hydrogen embrittlement according to the first embodiment, the metal contact between raceway surface 31aa (raceway surface 32aa) and rolling element 33 is facilitated to occur, with the result that flaking caused by hydrogen embrittlement is facilitated to be reproduced.

Although the embodiments of the present invention have been illustrated, the embodiments described above can be modified in various manners. Further, the scope of the present invention is not limited to the above-described embodiments. The scope of the present invention is defined by the terms of the claims, and is intended to include any modifications within the scope and meaning equivalent to the terms of the claims.

### INDUSTRIAL APPLICABILITY

The above embodiments are particularly advantageously applied to an test method for flaking caused by hydrogen embrittlement in a rolling bearing.

### REFERENCE SIGNS LIST

S1: preparation step; S2: rolling slip test step; 10: rolling bearing; 11: inner ring; 11a: upper surface; 11b: bottom surface; 11c: inner peripheral surface; 11d: outer peripheral surface; 11da: raceway surface; 12: outer ring; 12a: upper surface; 12b: bottom surface; 12c: inner peripheral surface; 12ca: raceway surface; 12d: outer peripheral surface; 13: rolling element; 14: cage; 20: test apparatus; 21: housing; 22: rotation shaft; 22a: first end; 22b: second end; 23: driving unit; 24: supporting bearing; 25: supporting bearing; 26: load receiving member; 27: pressing rod; 30: bearing; 31: inner ring; 31a: first surface; 31aa: raceway surface; 31b: second surface; 32: outer ring; 32a: first surface; 32aa: raceway surface; 32b: second surface; 33: rolling element; 34: cage; 40: test apparatus; 41: housing; 42: rotation shaft; 42a: first end; 42b: second end; 43: driving unit; 44: supporting bearing; A1, A2, A3, A4: central axis; LL: liquid level.

## Claims

1. An evaluation test method for flaking caused by hydrogen embrittlement, the evaluation test method comprising:
preparing a rolling bearing having a first bearing ring, a second bearing ring, and a rolling element, the first bearing ring being a rotation ring including a first raceway surface, the second bearing ring being a stationary ring including a second raceway surface facing the first raceway surface, the rolling element being disposed between the first raceway surface and the second raceway surface; and
applying a rotation about a central axis onto the first bearing ring in a state in which a load is applied between the first raceway surface and the second raceway surface through the rolling element, wherein
each of the first bearing ring, the second bearing ring, and the rolling element is composed of a steel,
the first raceway surface and the second raceway surface are always entirely immersed in lubricating oil during the rotation, and
the lubricating oil contains substantially no water.

2. The evaluation test method for flaking caused by hydrogen embrittlement according to claim 1, wherein
the rolling bearing is a radial ball bearing,
the central axis is along a horizontal direction, and
the load is applied along a direction orthogonal to the central axis.

3. The evaluation test method for flaking caused by hydrogen embrittlement according to claim 2, wherein the load is applied from a lower side in a vertical direction toward an upper side in the vertical direction.

4. The evaluation test method for flaking caused by hydrogen embrittlement according to claim 1, wherein
the rolling bearing is a thrust ball bearing,
the central axis is along a vertical direction, and
the load is applied along the vertical direction.

5. The evaluation test method for flaking caused by hydrogen embrittlement according to any one of claims 1 to 4, wherein a content of the water in the lubricating oil is more than or equal to 100 mass ppm and less than or equal to 200 mass ppm.

6. The evaluation test method for flaking caused by hydrogen embrittlement according to any one of claims 1 to 5, wherein the lubricating oil is a CVT fluid.

7. The evaluation test method for flaking caused by hydrogen embrittlement according to any one of claims 1 to 6, wherein a hydrogen concentration in the steel is less than or equal to 0.02 mass ppm.
